# EUROPEAN PATENT APPLICATION

(11) **EP 2 450 858 A1**
(43) Date of publication of application: **09.05.2012**
(21) Application number: 10382287.0
(22) Date of filing: 04.11.2010
(51) Int. Cl.: G07F 19/00, G06Q 20/00

(54) **System and method of interaction between a user and an automatic teller machine**

(71) Applicant: Fundosa Technosite S.A., 28037 Madrid (ES)
(72) Inventor: Torena Cristóbal, Roberto, 28037, MADRID (ES); González Perea, Lourdes, 28037, MADRID (ES); De la Cruz Morales, Carlos, 28037, MADRID (ES)
(74) Representative: Carpintero Lopez, Francisco

(57) **Abstract**

The invention relates to a system and method of interaction between a user and an automatic teller machine (200) in which the control of the teller machine is transferred to a mobile device of the user, thus allowing the elimination of accessibility barriers present in conventional teller machines. The teller machine (200) comprises a web server (210) which provides the mobile device with web pages that allow it to interact with the teller machine from said device.

## Description

### Field of the Invention

The present invention is applied to the field of automatic teller machines of bank entities, and more specifically, to the accessibility of said teller machines.

### Background of the Invention

The use of automatic teller machines, made available to customers by bank entities, is widespread today not only to withdraw cash but also for a large number of additional services, such as performing bank transfers or purchasing and collecting tickets.

A user can traditionally access said services by inserting a card or bank book, and by authenticating himself by means of entering a Personal Identification Number (PIN) on a numeric keypad. A screen and a plurality of buttons, or a touch screen, are typically used to allow the interaction of the user and the teller machine (i.e., browsing through the different services of the teller machine, collecting the instructions of the user, etc).

Nevertheless, this form of interaction prevents the easy and standard use for users with functional limitations. These deficiencies are particularly evident for those users who are visually impaired and who have motor difficulties because they must face physical and technological barriers: the cards or bank books are not in Braille so that the blind can identify them, the slot for inserting the card is not always within reach of a person in a wheelchair, the information displayed on the screen has no auditory alternative for the blind, or the position of said information in the teller machine prevents the visualization thereof for users with a motor impairment, etc.

On the other hand, different systems are known which allow the interaction of automatic teller machines and mobile devices (such as telephones or PDAs, for example).

For example, GB 2,396,472 A describes a system for cash withdrawal in which the user is identified by means of a wireless security module which replaces the conventional card. When said module has been authenticated in a teller machine (through a control center), said teller machine can receive commands sent from a mobile device (for example a telephone), for the purpose of withdrawing money.

Another type of interaction between mobile device and teller machine is described in EP 2,038,227 A2, in this case allowing the activation of the mobile device as a payment instrument, by means of transmitting thereto information about the user's accounts in the bank entity from a teller machine.

WO 2006/013218 A1 describes another payment system combining mobile telephones and teller machines. In this case, a user orders the payment of a certain amount of money to a beneficiary. Said beneficiary receives in his mobile telephone a text message containing an identifier allowing him to withdraw said money in cash at a teller machine without using a card.

Nevertheless, none of the earlier proposals eliminates the accessibility barriers which users with an impairment must face when interacting with automatic teller machines, thus preventing said users from comfortably and completely using the services of the automatic teller machine.

### Summary of the Invention

The present invention solves the problems described above by means of a method and system of interaction between a user and an automatic teller machine in which greater accessibility and ease-of-use are achieved, particularly benefiting people with visual and motor limitations as it allows viewing and handling all the functions of the automatic teller machine from a mobile device, such as a telephone for example, which is a practical communication tool for said users. Users currently have mobile terminals adapting to their needs and preferences, assuring them accessibility to the teller machine (availability for people with a visual impairment of support products installed in the terminal such as screen readers and magnifiers, keypad with large buttons for those having motor difficulties, etc.) and the ease-of-use (interaction with the device is familiar to them as it is a frequently used tool).

A first aspect of the invention presents a system of interaction between a user and an automatic teller machine, the automatic teller machine comprising:
- An operations application, i.e., the software in charge of performing the bank operations associated with the services offered by the teller machine, determining the information which the teller machine must display on the screen, interpreting the data entered by the users, etc.
- Communication means configured to set up a wireless communication with a mobile device; preferably by means of near field communication (NFC).
- A web server configured to send web pages to the mobile device of a user with is connected to the teller machine, and to receive from said mobile device instructions directed to the operations application. The web server thus acts as an intermediary between the mobile device of the user and the operations application, which allows transmitting the control of the teller machine to said device, rather than using the usual means (buttons and screens of the teller machine), which may involve accessibility barriers. In order to allow access to all the services, the content of the web pages sent to the mobile device is preferably equivalent to the content that a user who did not use a mobile device to handle the teller machine would see on the screen of the teller machine.

The teller machine also preferably further comprises a channel setup application managing communication with the mobile device in initial stages thereof until the web server is capable of taking over the communication. The web server and the channel setup application preferably form part of a virtual machine generated by the operating system of the teller machine, which thus allows assuring system security and interoperability.

The communications between the operations application and the web server and between the operations application and the channel setup application are preferably performed by means of protocols and standards typical of web services.

A second aspect of the present invention presents a method of interaction between a user and an automatic teller machine which allows effectively transferring the control of the teller machine to a mobile device of the user. Said method comprises the following steps:
- Setting up a wireless connection between a mobile device of the user and the teller machine;
- Transferring the control of the teller machine to the mobile device (i.e., allowing the use of the mobile device to view the information provided by the teller machine and to enter instructions) by means of sending web pages from a web server of the teller machine to the mobile device of the user and receiving instructions from the mobile device directed to the operations application.

A secure channel between the mobile device and the teller machine is preferably set up. Said secure channel is preferably set up by means of requesting credentials previously provided to the mobile device, for example, from a web page of the bank entity.

In order to collect the instructions entered from the mobile device, the web server preferably receives an http message on TLS (Transport Layer Security) with an instruction; and said instruction is forwarded from the web server to the operations application by means of web services.

The mobile device is thus used to interact with the teller machine, without losing access to any service provided by said teller machine, and overcoming the accessibility problems associated with traditional means of interaction.

These and other advantages will become apparent in light of the detailed description of the invention.

### Brief Description of the Drawings

For the purpose of aiding to better understand the features of the invention according to a preferred practical embodiment thereof and to complement this description, the following illustrative and non-limiting figures are attached as an integral part thereof:
Figure 1 presents a diagram of the elements present in a mobile device capable of connecting to a system according to a preferred embodiment of the invention.
Figure 2 presents the elements comprised in a teller machine according to a preferred embodiment of the invention.
Figure 3 shows an example of the phase of providing and customizing secure elements according to a preferred embodiment of the method of the invention.
Figure 4 shows an example of the phase of activating the service in the teller machine.
Figure 5 shows an example of the phase of authenticating the customer and identifying the teller machine.
Figure 6 shows an example of the phase of setting up a secure channel.
Figure 7 shows an example of the phase of executing operations in the teller machine.
Figure 8 shows an example of the phase of terminating the interaction.

### Detailed Description of the Invention

In this text, the term "comprises" and its derivatives (such as "comprising", etc.) must not be understood in an excluding sense, i.e., these terms must not be interpreted as excluding the possibility that what is described and defined may include more elements, stages, etc.

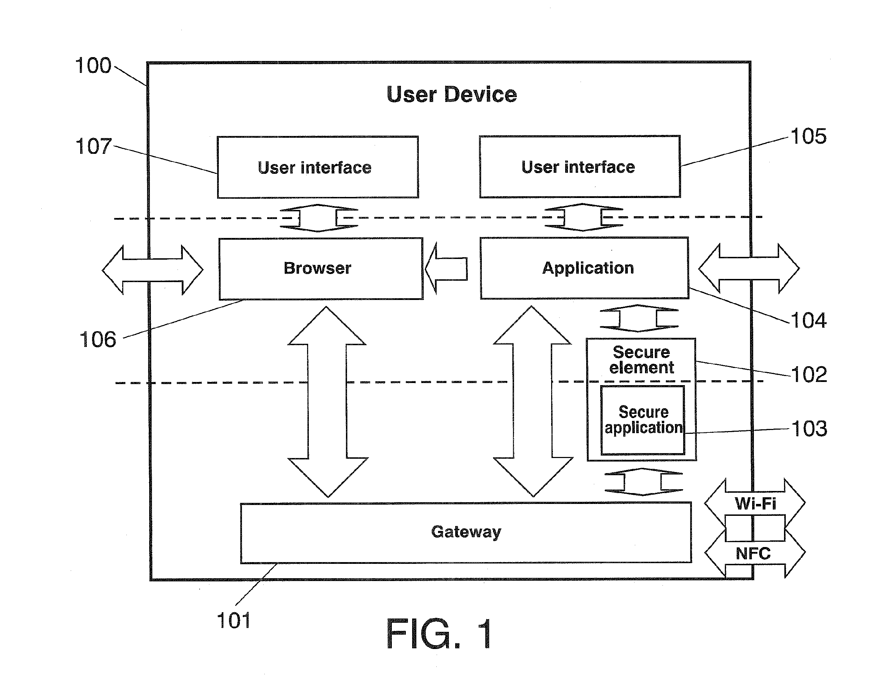

Figure 1 shows an example of the elements necessary in the mobile device of a user accessing a teller machine with the method and system of the present invention. It must be noted that said mobile device does not form part of the present invention, but rather is shown to allow the explanation thereof.

There are two stacks in the user device 100 which interact with the teller machine separately. The first one is made up of the following elements:
- Gateway 101. It allows the connection of the elements through wireless communication protocols (such as NFC and Wi-Fi).
- Secure element 102 of the user device (SE-UD). It corresponds to the element in which one or several payment applications 103 are housed, and which provides a secure area for executing the applications and protecting payment aspects (e.g. keys, payment information, etc.).
- Payment application 103 of the user device (PA-UD). Payment application housed in the secure element 102.
- Application of the user device 104 (A-UD). Application housed in the user device managing some phases of the interaction as will be explained below.
- User interface of the first stack 105. It corresponds to the traditional concept of user interface. The interface typology, and therefore the modes of interaction of the user with the device, vary according to the device, the built-in technical assistance, etc.

The second stack of the user device is made up of the following elements:
- Gateway 101. It corresponds to the same element described in the previous stack.
- Web browser 106 of the user device (WB-UD). It corresponds to the usual web browser of the user device
- User interface of the second stack 107. It corresponds to an element similar to the one described in the previous stack, only in this case providing support to the web access.

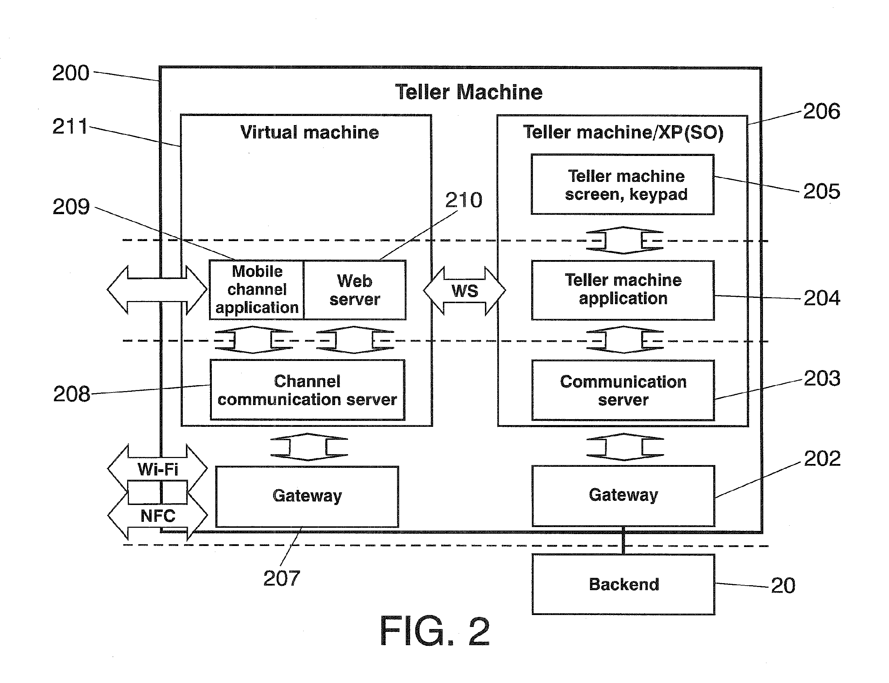

Figure 2 shows a preferred embodiment of the system of interaction between a user and a teller machine implemented in said teller machine and configured to execute the method of the invention. There are also two stacks in the teller machine 200. The first one corresponds to the elements that are normally available in teller machines today, supported by an operating system 206:
- Backend 201. It corresponds to all the processing, routing systems, etc. established by the bank environment for performing operations.
- Gateway of the first stack 202. This device allows a teller machine to access the bank backend 201 to perform the operations.
- Communications server 203. This server manages communications between the application of the teller machine 204 and the backend 201.
- Application of the teller machine 204 (A-ATM), also referred to as operations application. This application is executed in teller machines for performing normal operations. This layer is the link with the stack located in the virtual machine 211 described below
- Screen and keypad 205. These are usual interfaces existing in teller machines.

The second stack is executed in a virtual machine 211 for security and interoperability reasons. It is made up of the following elements:
- Gateway of the second stack 208. This device allows the teller machine to communicate with the mobile device 100 (through communication protocols such as NFC and Wi-Fi).
- Communications server of the channel 208 in the teller machine (CS-ATM). This element manages communications with the user device through the Gateway of the second stack 208; being responsible for the activation of and access to the Wi-Fi network, as well as NFC connectivity.
- Mobile channel application 209 in the teller machine (CA-ATM). This application is housed in the teller machine and initially manages the process and the communications until it is relieved by the web server 210 of the teller machine.
- Web server 210 in the teller machine (WS-ATM). This application is housed in the teller machine and provides a set of web pages to the WB-UD 106 which allows executing the desired operations in the teller machine.

The connecting link between the two stacks of the teller machine is at the application level; the CA-ATM with A-ATM and WS-ATM with A-ATM communications are performed by means of web services (WS) to assure the highest possible level of interoperability. This structure allows maintaining the current systems present in teller machines, adding a new input through WS, and maintaining the remaining elements in a virtual machine.

According to a preferred embodiment of the method of interaction between a user and a teller machine of the invention, six phases are established which are executed sequentially:
1. Providing and customizing secure elements
2. Activating the service in the teller machine
3. Authenticating the customer and identifying the teller machine
4. Setting up a secure channel
5. Executing operations in the teller machine
6. Terminating the interaction

It must be noted that the first phase corresponds with providing necessary applications, keys, and authorizations, and that it is therefore exclusively executed in the first interaction (or prior to same), and when any of the stored parameters are to be updated. The remaining phases are carried out during each interaction between the teller machine and the mobile device of the user.

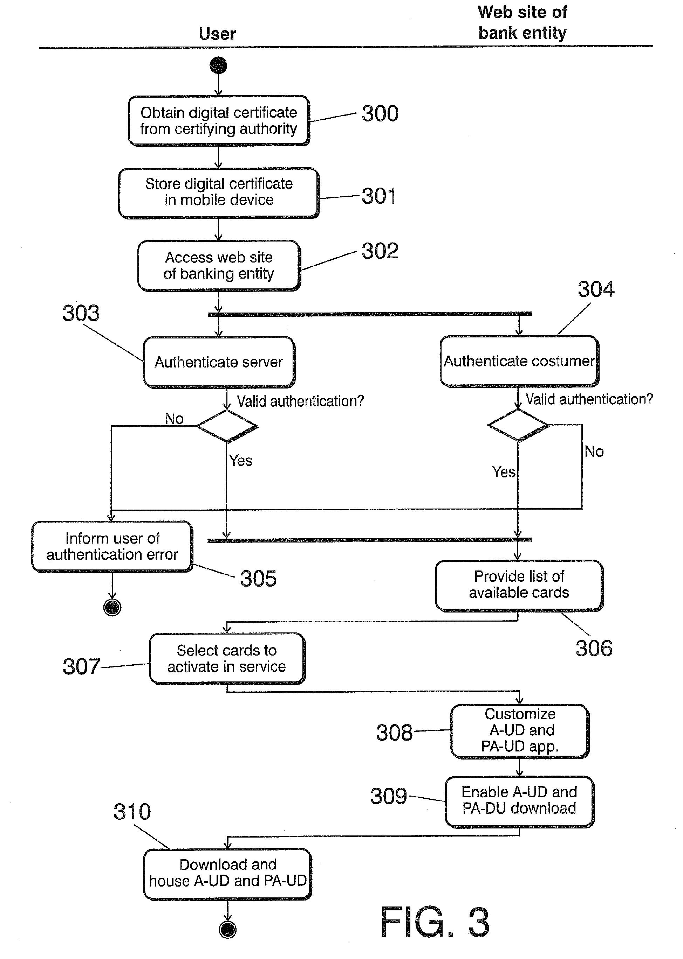

### PHASE 1. PROVIDING AND CUSTOMIZING SECURE ELEMENTS (Figure 3)

This first stage involves a phase prior to the use of the teller machine through the mobile device, its objectives being to notify the bank entity of the desire to use the service, to inform the user of its operation, and to prepare the mobile device for subsequent interactions with the teller machine. The operation of said first stage is as follows:
1. The user obtains 300 a certificate with his corresponding public and private keys from a certifying entity (ATM).
2. The user stores 301 said digital certificate in the mobile device. The certificate can optionally be stored with the private key secure protection function activated or deactivated. The private key secure protection function forces the user to enter the password every time the private key is accessed. This function reduces system usability since it forces the user to remember and type in an additional key, however it assures that a private key cannot be used without his knowledge and acceptance.
3. The user requests 302 the activation of this service from his bank entity. This can be done in different ways:
   - Over-the-Air (OTA). For example by means of text messages
   - Online banking through the mobile device
   - Online banking through a device (e.g. computer) and subsequent transmission to the mobile device
4. The bank entity carries out its normal authentication processes and provides 306 the user with information relating to the credit/debit cards available for the service, as well as the operation of said service. The authentication comprises both authenticating the server 303 and authenticating the customer 304. Should either of said authentications fail, the user is informed 305 that an error has occurred.
5. The user selects 307 the cards which he wants to have available in the applications: application of the user device (A-UD) and the payment application of the user device (PA-UD).
6. The bank entity customizes 308 the A-UD and PA-UD applications with information relating to the selected cards. The information housed in A-UD corresponds to non-sensitive data which allows the user to identify the card he wants to use (e.g. last 4 digits of the card + type of card + bank entity). The information housed in PA-UD corresponds to that stored in the magnetic strips of the credit/debit cards which the user has selected.
7. The bank entity enables 309 the download of the A-UD and PA-UD applications for the user.
8. The first phase concludes with the user downloading 310 and housing said applications. For security reasons, PA-UD is housed in the secure element of the user device (SE-UD).

According to another preferred embodiment of the invention, the inclusion of a security phrase provided in this phase by the user is contemplated. Subsequently when the user accesses the service, this phrase is returned to him by the server.

This process is normally used by bank entities in online banking services, and the purpose thereof is to assure the user that he is connected to his bank's service and not with an intruder. Therefore, the object thereof is to identify the service, since the user is identified by other means (information encoded in the credit card and PIN).

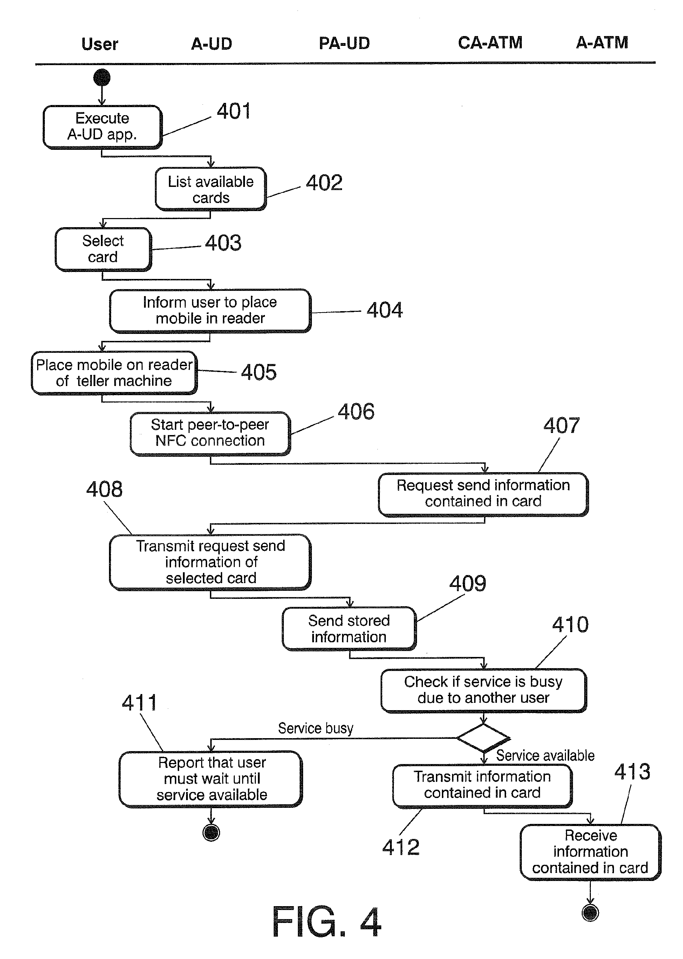

### PHASE 2. ACTIVATING THE SERVICE IN THE TELLER MACHINE (Figure 4)

The execution of phase 2, "Activating the service in the teller machine", is started by an action of the user. The correct termination of this phase automatically starts phase 3, "Authenticating the customer and identifying the teller machine". Phase 2 has two purposes:
- Notifying the application of the teller machine (A-ATM) of the request made by the user to activate the interaction service through the mobile device, rather than conventionally doing so by means of a card with a magnetic strip.
- Providing the application of the teller machine (A-ATM) with information relating to the card selected by the user in his device (which information corresponds with that stored in the magnetic strips of the cards).

In order for the user to be able to detect the point where he must place his mobile device, regardless of his functional diversity, the teller machine offering this service has suitable accessibility means (for example, graphic symbol, tactile marking, Braille and textual identification, standard position, etc.).

Phase 2 comprises the following steps:
1. The user executes 401 an application (A-UD).
2. A-UD shows 402 the user a list of the activated cards for providing the service.
3. The user selects 403 in A-UD the card he wishes to use.
4. A-UD asks 404 the user to place the mobile device on the NFC reader of the teller machine.
5. The user positions 405 the mobile telephone on the NFC reader of the teller machine. If the user positions the mobile device on the reader without having performed actions 1 and 2 of this phase, WS-ATM will detect that the mobile device has been positioned by means of the NFC reader of the teller machine (if the mobile device has the NFC activated) or by other means (e.g. with an electric sensor). This information is sent to A-ATM and the teller machine by means of a locution (if this function is available) and textual information on the screen requests the user to execute the A-UD application and select the card to be used.
6. A-UD starts 406 a peer-to-peer NFC connection with CA-ATM.
7. Once the connection is set up, CA-ATM requests 407 that A-UD send the corresponding information housed in PA-UD to the selected card.
8. A-UD transmits 408 to PA-UD the request to send the stored information about the selected card.
9. PA-UD sends 409 the requested information to CA-ATM.
10. CA-ATM checks 410 if there is any user making use of that service at that time:
   - If the service is busy, CA-ATM informs A-UD of this fact and A-UD displays 411 an error message for the user.
   - If the service is available, CA-ATM transfers 412 the information relating to the selected card to A-ATM. When A-ATM receives 413 said information, it displays on the screen of the teller machine a message reporting that the teller machine service is busy because of an interaction from a mobile device and phase 3, "Authenticating the customer and identifying the teller machine", starts.

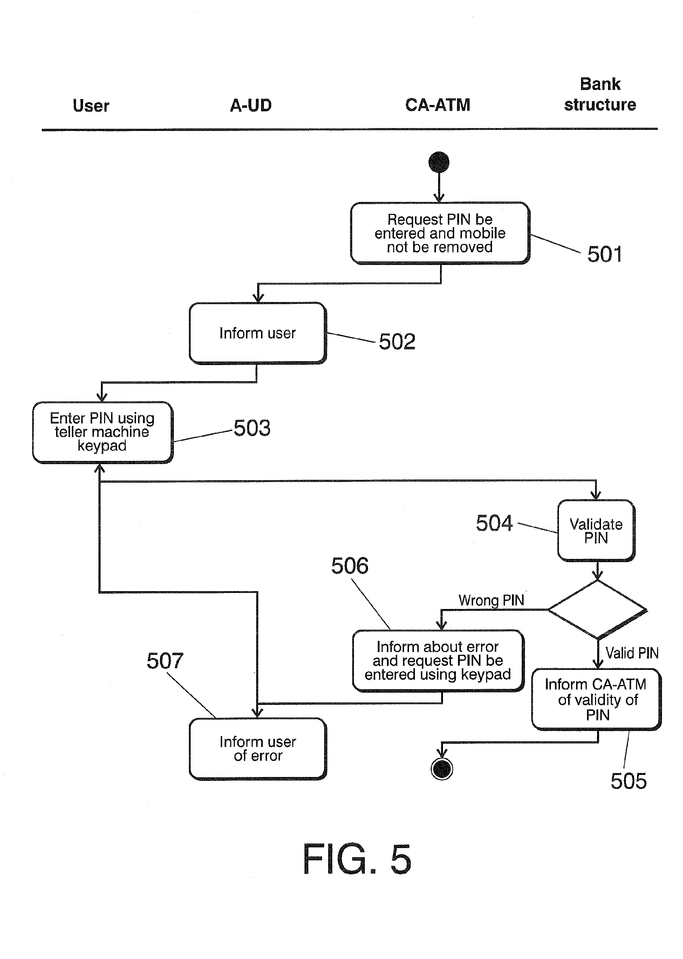

### PHASE 3. AUTHENTICATING THE CUSTOMER AND IDENTIFYING THE TELLER MACHINE (Figure 5)

The execution of phase 3, "Authenticating the customer and identifying the teller machine", is started by CA-ATM after the transmission of the information of the card to the A-ATM in phase 2. The termination of this phase with the validated PIN automatically starts phase 4, "Setting up a secure channel".

The purpose of phase 3 is for the user to authenticate himself by means of entering the PIN code of the selected card in the keypad of the teller machine. This action presents accessibility barriers in some cases, but the bank structure today does not allow another, more optimal option. The fact that it must be entered on the keypad of the teller machine introduces a security level as the information transmitted wirelessly cannot be intercepted.

Phase 3 comprises the following steps:
1. CA-ATM sends 501 to A-UD a message containing:
   - A request to enter the PIN on the keypad of the teller machine.
   - A notice to keep the mobile device on the NFC reader until told otherwise.
2. A-UD shows 502 this information to the user.
3. The user enters 503 the PIN code on the keypad of the teller machine.
4. The bank structure validates 504 the entered PIN through its normal processes.
5. If the entered PIN is not valid:
   - A-ATM informs 506 CA-ATM of this fact and of his remaining opportunities to correctly enter the PIN
   - CA-ATM transmits 507 this information to A-UD so that it is shown to the user
   - The user again enters the PIN code on the keypad of the teller machine if he has any opportunities left to do so.
6. If the entered PIN is valid, it communicates to CA-ATM that the next phase can start.

Additionally, another preferred embodiment of the invention contemplates using a phrase previously recorded by the user which teller machines will return when the user identifies himself as a security element, thus assuring that the teller machine belongs to the service provider given that it has access to said information.

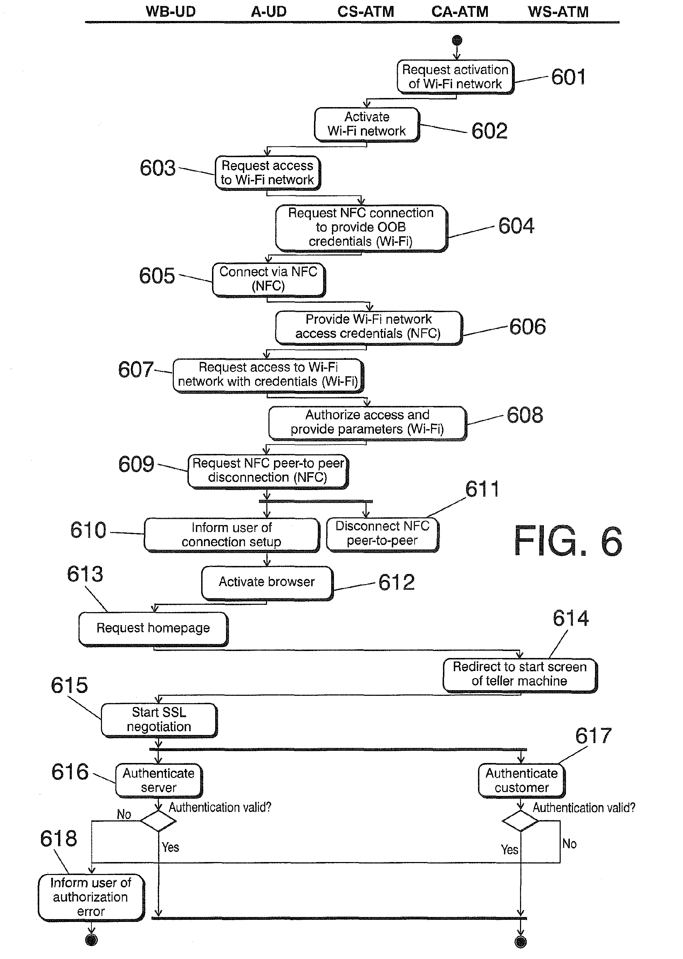

### PHASE 4. SETTING UP A SECURE CHANNEL (Figure 6)

The execution of phase 4b, "Setting up a secure channel", is started by CA-ATM after the A-ATM receives the validity of the PIN entered on the keypad of the teller machine. The termination of this phase with the valid authentication of the customer and server automatically starts phase 5, "Executing operations in the teller machine".

The purposes of this phase are setting up a secure wireless channel in a manner that is transparent for the user. This security is set up at two levels:
- Wi-Fi network: The necessary credentials are provided to the user by means of NFC. Through Wi-Fi Protected Setup with out-of-band information exchange (WPS - NFC) the user will be provided with credentials that will allow him to set up a secure channel with the Wi-Fi Protected Access 2 protocol and the Advanced Encryption Standard (WPA2/AES) encrypting algorithm.
- Customer-server interaction: The security at this level is based on the HTTPS protocol, using widespread processes in the web environment. The digital certificates of the user (stored during phase 1 in the mobile device) and of the web server are the authentication means used for setting up the Transport Layer Security (TLS) .

Phase 4 comprises the following steps:
1. After A-ATM receives the validity of the PIN entered in the keypad of the teller machine, CA-ATM makes a petition 601 to CS-ATM to activate the Wi-Fi network.
2. CS-ATM activates 602 the Wi-Fi network.
3. The user device detects 603 this network. A-UD requests from CS-ATM access to the Wi-Fi network (via Wi-Fi).
4. CS-ATM requests 604 from A-UD its connection via NFC for providing the credentials as described in the WPS ― NFC protocol (via Wi-Fi).
5. A-UD is connected 605 with CS-ATM via NFC.
6. CS-ATM provides 606 A-UD with the credentials which allow it to connect to the network and set up a secure channel by means of WPA2/AES (via N FC).
7. A-UD requests access 607 to the Wi-Fi network from CS-ATM with the obtained credentials (via Wi-Fi).
8. CS-ATM authorizes 608 access to the network for A-UD and provides it with the parameters for access to the web service (IP address, subnet mask, etc.) (via Wi-Fi).
9. A-UD requests the disconnection 609 of the NFC channel from CS-ATM (via NFC).
10. Connection to the web service is prepared:
   - A-UD informs the user that he is connected to the teller machine and he can perform the desired operations through the web browser. He is also informed that he can now remove the mobile device from the reader.
   - CS-ATM deactivates 611 the NFC peer-to-peer connection.
   - Through CA-ATM, CS-ATM informs 610 A-ATM that a connection has been set up through the mobile device. A-ATM reports this fact on the screen of the teller machine.
11. A-UD activates 612 the browser (WB-UD) in the user device.
12. WB-UD requests its homepage 613 by default from the web server (WS-ATM).
13. WS-ATM has a captive portal installed therein, so when the browser of the mobile device requests its homepage from the teller machine, this request is ignored and he is redirected 614 to the homepage of the service of the teller machine. Access to the pages is done by means of HTTPS protocol.
14. WS-ATM starts the negotiation 615 for setting up TLS as described in the HTTPS/TLS standard. The user authentication 617 is performed by means of the digital certificate obtained in phase 1. If said user authentication 617 or the server authentication 616 fails, the user is informed of the error 618.
15. Successfully setting up the TLS gives way to phase 5, "Executing operations in the teller machine".

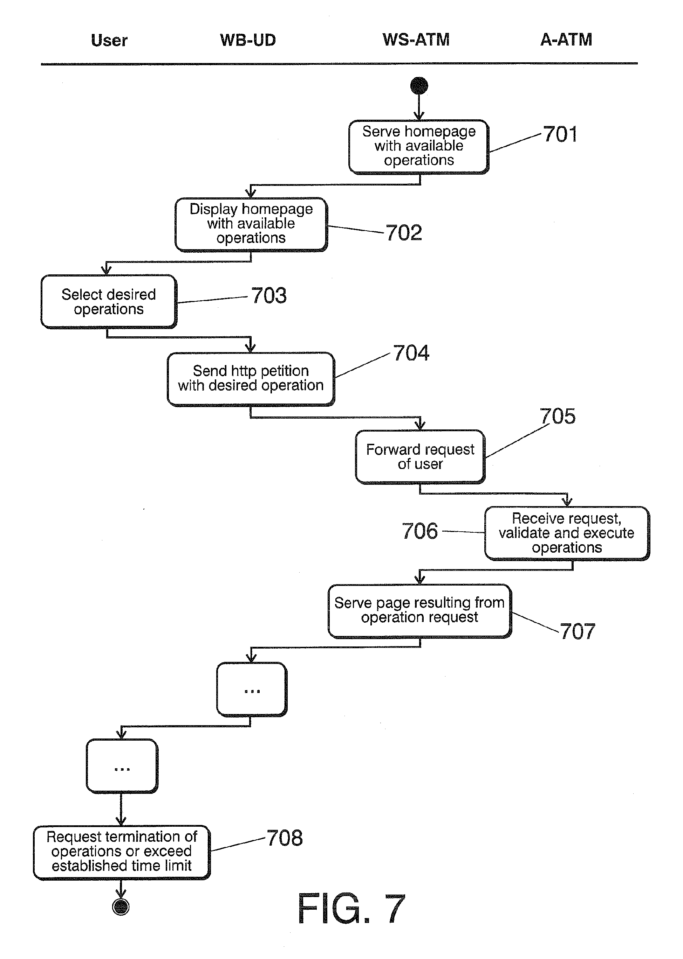

### PHASE 5. EXECUTING OPERATIONS IN THE TELLER MACHINE (Figure 7)

The execution of phase 5, "Executing operations in the teller machine", is started by WS-ATM after the successful termination of setting up the TLS in phase 4. The termination of this phase, either with the request of the user to terminate the interaction or with the execution of the latter due to the inactivity of the user, automatically starts phase 6, "Terminating the interaction".

The purpose of this phase is to execute the actions desired by the user on the teller machine through the web server thereof (WS-ATM). The information transmitted by the web pages which WS-ATM sends to the browser of the user (WB-UD) is the same as that provided to a user who was interacting with the teller machine through the usual means, by means of the keypad, the screen, etc, adjusted to the corresponding accessibility guidelines.

Phase 5 comprises the following steps:
1. WS-ATM serves 701 to WB-UD the homepage of the teller machine with the available operations.
2. WB-UD shows 702 the user a web page with the available operation options.
3. The user selects 703 the operation he wants to carry out.
4. WB-UD sends 704 an http message to WS-ATM on TLS with the selected option.
5. WS-ATM forwards 705 the option selected by the user to A-ATM by means of WS.
6. A-ATM receives 706 the request and acts in a manner similar to if the operation had been performed on the usual input interfaces of the teller machine, validating it and executing the relevant actions. A-ATM communicates to WS-ATM by means of WS the next page that has to be provided to the user.
7. WS-ATM transmits 707 the next web page to WB-UD.
8. This process is cyclically repeated until the user requests 708 the termination of the operations or if a time limit in which no interaction has taken place is exceeded.

In the event that the user typing on the address bar of the browser requests any external or unauthorized web address, the server having a captive portal installed therein will send to the user, depending on the specific implementation, an error notification page, the homepage of the teller machine or the page the user was on.

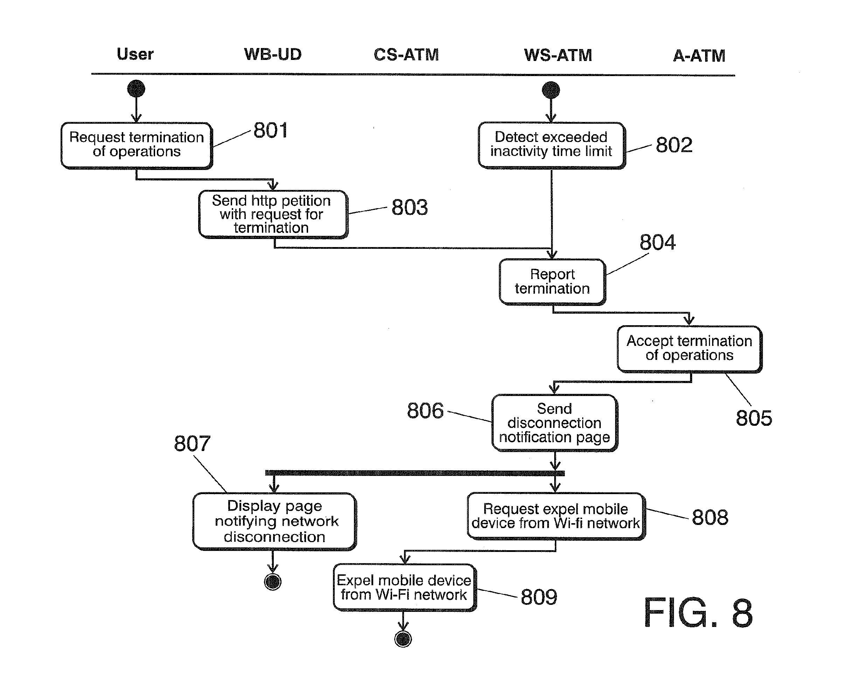

### PHASE 6. TERMINATING THE INTERACTION (Figure 8)

The purpose of this phase is to perform the relevant actions which allow terminating the interaction between the user and the teller machine, and preparing the latter for successive operations with other users, and it can be started by two different events:
- Request of the user. The user selects the option to terminate operations.
- The established time limit for inactivity has been exceeded. This automatic deactivation is designed to prevent dangerous situations, such as when a user forgets to terminate the operations or the Wi-Fi network crashes, the entire system is disabled.

After the termination of this phase, the teller machine is available to execute interactions with other users.

The phase of termination comprises:
1. Starting the phase:
   - The user terminates 801 the interaction with the teller machine by means of the options shown to him by the WB-UD (e.g. cancel operation, no more operations, etc.). This message is transmitted 803 by means of an http request with the chosen selection.
   - WS-ATM detects 802 an abnormally high inactivity period of the user and determines the cancellation of the operations automatically, as well as the termination of the interaction.
2. WS-ATM notifies 4 A-ATM by means of WS the option selected by the user or the request to cancel operations.
3. A-ATM executes 805 the changes in the information displayed on the screen of the teller machine in order to indicate that it is available for use, accepts the termination of operations and communicates this to WS-ATM.
4. WS-ATM sends 806 to WB-UD a page with the notification that the service has terminated.
5. WB-UD displays 807 for the user the page provided by WS-ATM.
6. WS-ATM requests 808 that CS-ATM expel the mobile device from the Wi-Fi network.
7. CS-ATM expels 809 the mobile device from the Wi-Fi network.

Therefore, by means of the system and method described the control of the teller machine is transferred to the mobile device of the user in a secure manner and allowing him to access all the services offered by said teller machine, while at the same time solving accessibility barriers present in conventional teller machines.

In view of this description and drawings, the person skilled in the art could understand that the invention has been described according to several preferred embodiments thereof, but that multiple variations can be introduced in said preferred embodiments without departing from the object of the invention as it has been claimed.

## Claims

1. System of interaction between a user and an automatic teller machine (200), wherein the teller machine (200) comprises:
- an operations application (204) configured to manage the operations available in the teller machine (200), **characterized in that** the teller machine (200) further comprises:
- communication means configured to set up wireless communication with a mobile device (100);
- a web server (210) configured to send web pages to the mobile device (100) to which the teller machine (200) is configured to be connected, and to receive from said mobile device (100) instructions directed to the operations application (204).

2. System according to claim 1, **characterized in that** the web pages reproduce information displayed on a screen (205) of the teller machine when said teller machine (200) operates through a mobile device (100).

3. System according to any of the previous claims, **characterized in that** it further comprises a mobile channel application (209) in the teller machine (200) configured to manage the communications between the teller machine (200) and the mobile device (100) until communication between the web server (210) and said mobile device (100) is set up.

4. -System according to claim 3, **characterized in that** the web server (210) and the mobile channel application (209) are comprised in a virtual machine (211) hosted in an operating system (206) of the teller machine.

5. System according to claim 4, **characterized in that** the operations application (204) communicates with the web server (210) and with the mobile channel application (209) by means of web services.

6. System according to any of the previous claims, **characterized in that** the wireless communication which the communication means are configured to set up is near field communication and wireless local area communication.

7. Method of interaction between a user and an automatic teller machine (200), **characterized in that** it comprises:
- setting up a secure wireless connection between a mobile device (100) of the user and the teller machine (200);
- sending web pages from a web server (210) of the teller machine to the mobile device (100) of the user, said web pages reproducing the operations of the teller machine (200) so as to allow the handling thereof from the mobile device (100);
- receiving instructions from the mobile device (100) directed to the operations application (204).

8. Method according to claim 7, **characterized in that** it further comprises setting up a secure channel between the mobile device (100) and the teller machine (200).

9. Method according to any of claims 7 and 8, **characterized in that** the step of receiving instructions from the mobile device (100) in turn comprises:
- receiving an http message in the web server (210) with an instruction;
- forwarding said instruction from the web server (210) to the operations application (204) by means of web services.
